# EUROPEAN PATENT SPECIFICATION

(11) **EP 1 952 582 B1**
(45) Date of publication and mention of the grant of the patent: **25.05.2011**
(21) Application number: 06826507.3
(22) Date of filing: 24.10.2006
(51) Int. Cl.: H04L 12/28

(54) **METHOD AND APPARATUS OF EXCHANGING MESSAGES VIA A WIRELESS DISTRIBUTION SYSTEM BETWEEN GROUPS OPERATING IN DIFFERENT FREQUENCIES**
VERFAHREN UND VORRICHTUNG ZUM AUSTAUSCH VON NACHRICHTEN ÜBER EIN DRAHTLOSES VERTEILERSYSTEM ZWISCHEN IN VERSCHIEDENEN FREQUENZEN OPERIERENDEN GRUPPEN
PROCEDE ET APPAREIL D'ECHANGE DE MESSAGES PAR L'INTERMEDIAIRE D'UN SYSTEME DE DISTRIBUTION SANS FIL ENTRE DES GROUPES FONCTIONNANT SUR DES FREQUENCES DIFFERENTES

(30) Priority: 03.11.2005 US 733292 P; 29.09.2006 US 537161
(43) Date of publication of application: 06.08.2008
(60) Divisional application: 11163353.3
(73) Proprietor: INTERDIGITAL TECHNOLOGY CORPORATION, Wilmington, DE 19810 (US)
(72) Inventor: ROY, Vincent, Montreal, Québec H2S 2E1 (CA); RUDOLF, Marian, Montreal, Québec H3J 2P3 (CA); MARINIER, Paul, Brossard, Québec J4X 2J7 (CA); ZAKI, Maged, M., Pierrefonds, Québec H8Y 3N5 (CA)
(74) Representative: Johansson, Magnus
(86) International application number: PCT/US2006/041365
(87) International publication number: WO 2007/055898

(56) References cited:
- EP-A2- 1 263 176
- WO-A-01/71981
- US-A1- 2005 164 724

## Description

FIELD OF THE INVENTION

The present invention is related to a wireless communication system. More particularly, the present invention is related to a method and apparatus for exchanging messages via a wireless distribution system between groups operating in different frequencies.

BACKGROUND

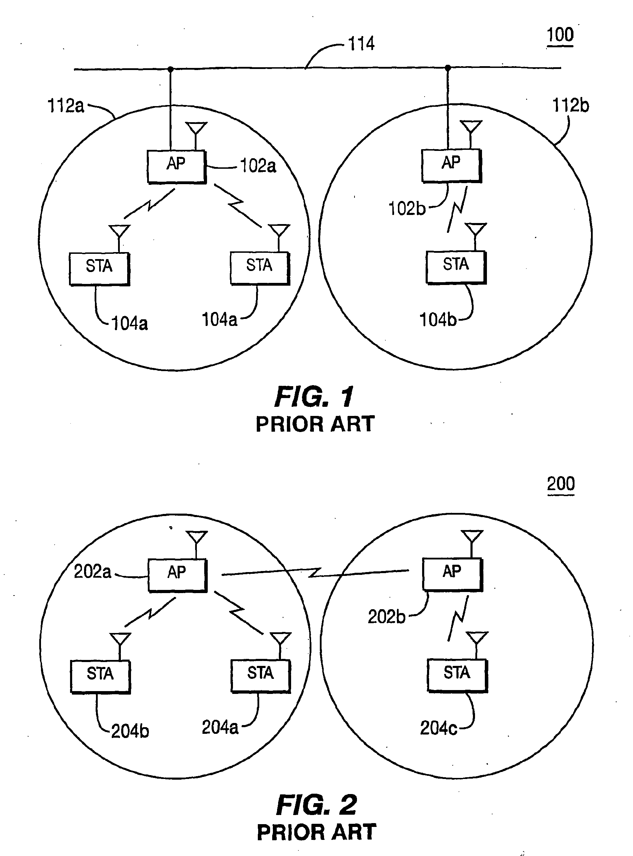

Figure 1 shows a conventional infrastructure mode wireless local area network (WLAN) 100 with a wired distribution system (DS) 114. In the infrastructure mode WLAN 100, a plurality of basic service sets (BSSs) 112a, 112b are connected to the DS 114, and access points (APs) 102a, 102b relay traffic to and from the DS 114. Each AP 102a, 102b serves STAs 104a, 104b located in the BSSs 112a, 112b, respectively. A DS is typically a wired network connecting the BSSs 112a_{;} 112b as shown in Figure 1.

Figure 2 shows a conventional infrastructure mode WLAN 200 with a wireless distribution system (WDS). If the wired DS does not exist, communication between APs 202a, 202b may take place wirelessly using the WDS. Through the same mechanisms which allow an AP, such as the AP 202a, to send and receive packets to and from other APs, such as the AP 202b, via the WDS, it is possible for a station (STA), (i.e., a non-AP STA), such as a STA 204a or a STA 204b, to send and receive packets to other nodes, such as a STA 204c or an AP 202b, that are outside its BSS or its IBSS. A STA capable of sending packets to other nodes outside its BSS or independent BSS (IBSS) is called a STA with WDS capabilities.

When referred to hereafter, the terminology "single-transceiver node" is referred to as a node, (either an AP or a STA), capable of transmitting or receiving on a single channel at a time, the terminology "group" refers to a BSS or an IBSS without any distinction, the terminology "WDS traffic" or "WDS packet" refers to traffic or a packet transmitted from a node in one group to a node in another group. The WDS packet may be a packet sent from an AP in one BSS to an AP in another BSS, or a packet sent from a STA in one BSS, (or IBSS), to a STA in another BSS, (or IBSS).

Carrier sensing multiple access (CSMA) is a medium access control (MAC) mechanism used by a node, (either a STA or an AP), such that the node listens to a channel in order to detect whether the channel is busy before transmitting a packet and to detect the arrival of a packet that is destined to the node. Listening to a channel is referred as node camping on a given channel. The channel that the node camps on is typically advertised through a beacon frame and/or a probe response frame. A relevant prior art document is represented by document US 2005/164724.

In a WLAN, such as an IEEE 802.11 network, STAs and an AP within a BSS, (or an IBSS), share the same frequency channel(s) to communicate with each other. A single-transceiver node uses the same channel both to transmit and receive packets. Therefore, the single-transceiver node cannot transmit packets on one channel while receiving packets on another channel. Additionally, for successful communication between two nodes, a source node must transmit a packet on the frequency channel used by a destination node. Therefore, for two or more nodes from different groups, (i.e., BSSs or IBSSs), to be interconnected through a WDS, the nodes must use at least one common channel to send and receive WDS packets. This imposes a limit on the capacity that the WDS may achieve and limits its scalability.

Furthermore, in a system where nodes are only equipped with a single transceiver, WDS traffic and normal data traffic are typically multiplexed on the same channel using a CSMA scheme. This leads to the situation where the channel used within a group, (i.e., BSS or IBSS), is the same as the channel used for the WDS and that all groups must use the same channel in order to maintain connectivity between the groups. This limits the capacity available to users, and limits the scalability of the system.

Therefore, it is desirable to provide a method and apparatus for supporting connectivity between groups without such limitations of the prior art.

SUMMARY

The present invention is related to a method, according to claim 1, and apparatus, according to claim 9, for exchanging messages via a wireless distribution system between groups operating on different frequencies. A wireless communication system includes a plurality of wireless transmit/receive units (WTRUs) and a plurality of BSSs. At least one WTRU belongs to each BSS. A source WTRU desiring to send a WDS packet to a destination WTRU in another BSS sends an availability notification (AN) message to WTRUs associated with the source WTRU, in the BSS of the source WTRU, to indicate that the source WTRU will not be available to receive data. The source WTRU then accesses a channel on which the destination WTRU camps and sends a packet to the destination WTRU. After transmission of the packet, or receiving an acknowledgement from the destination WTRU, the source WTRU reverts back to the original channel.

BRIEF DESCRIPTION OF THE DRAWINGS

Figure 1 shows a conventional infrastructure mode WLAN with a wired DS.

Figure 2 shows a conventional infrastructure mode WLAN with a WDS.

Figure 3 shows an exemplary wireless communication system configured in accordance with the present invention.

Figure 4 is a flow diagram of a process for exchanging a message between nodes in groups operating in different channels in accordance with the present invention.

Figure 5 is a detailed flow diagram of a process for exchanging a message between nodes in groups operating in different channels in accordance with the present invention.

Figure 6 is a block diagram of a WTRU configured in accordance with the present invention.

DETAILED DESCRIPTION OF THE PREFERRED EMBODIMENTS

When referred to hereafter, the terminology "WTRU" includes but is not limited to a user equipment, a mobile STA, a fixed or mobile subscriber unit, a pager, or any other type of device capable of operating in a wireless environment. When referred to hereafter, the terminology "AP" includes but is not limited to a base station, a Node-B, a site controller, or any other type of interfacing device in a wireless environment. The terminology "node" is used to refer to either the WTRU or the AP.

The features of the present invention may be incorporated into an integrated circuit (IC) or be configured in a circuit comprising a multitude of interconnecting components.

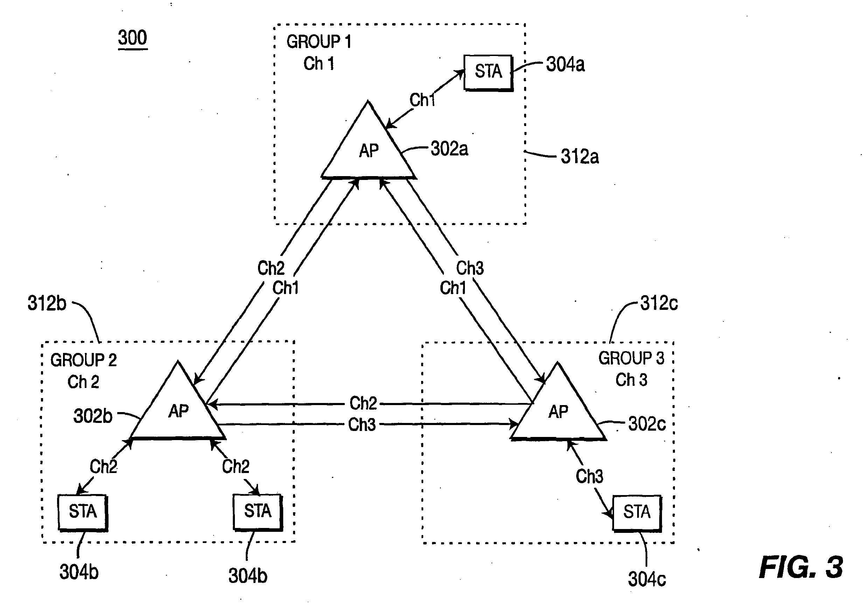

Figure 3 shows an exemplary wireless communication system 300 configured in accordance with the present invention. The system 300 includes three groups, (i.e., BSSs) 312a-312c. Each group 312a-312c includes one AP 302a-302c, respectively, and uses different channels. The APs 302a-302c are camping their transceivers on different channels. The AP 302a camps on channel 1, the AP 302b camps on channel 2, and the AP 302c camps on channel 3. Therefore, the AP 302a communicate with a STA 304a associated with the AP 302a on the channel 1, the AP 302b communicates with a STA 304b associated with the AP 302b on the channel 2, and the AP 302c communicates with a STA 304c associated with the AP 302c on the channel 3.

In accordance with the present invention, an AP desiring to send a WDS packet, (or a series of packets), to another AP sends an availability notification (AN) message to a STA associated with the AP to indicate that the AP is not available to receive a packet for a period indicated by the AN message, and switches to another channel on which the destination AP camps and switches back to the original channel. For example, the AP 302a desiring to send a WDS packet to the AP 302c sends an AN message to a STA 304a indicating that the AP 302a is not available to receive a packet from the STA 304a for a period of T, and switches to the channel 3 to send a WDS packet to the AP 302c. After completion of the transmission, or receiving an acknowledgement (ACK) from the AP 302c, the AP 302a switches back to the channel 1 to serve its BSS 312a.

It should be understood that the present invention is applicable to the situation where one or more groups may be an IBSS. In such case, the node relaying traffic to and from neighboring groups is a STA with WDS capabilities.

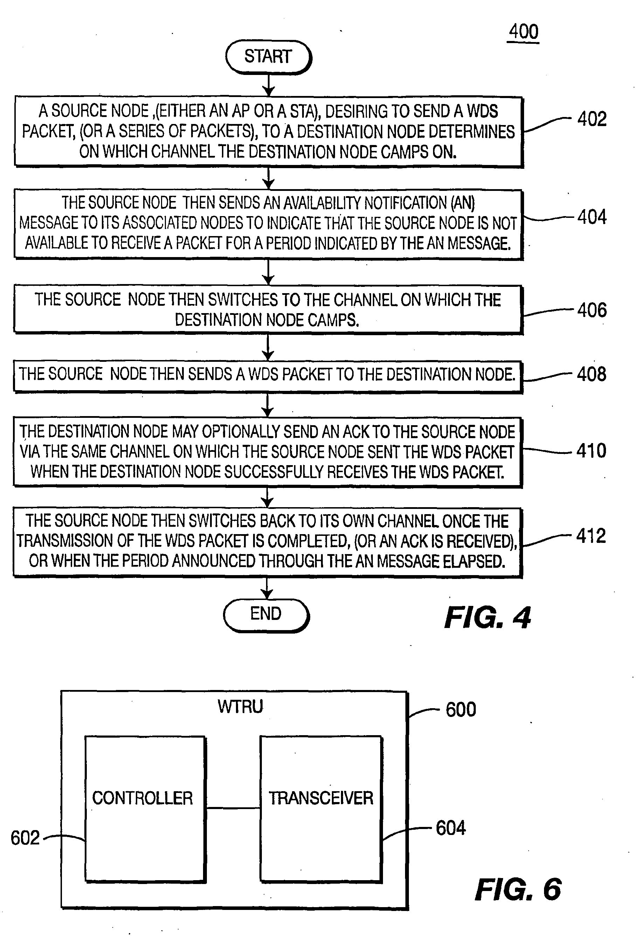

Figure 4 is a flow diagram of a process 400 for exchanging a message between nodes in groups operating on different channels in accordance with the present invention. A source node, (either an AP or a STA), desiring to send a WDS packet, (or a series of packets), to a destination node, determines on which channel the destination node camps (step 402). The step 402 typically involves accessing an internal database and may be performed prior to the moment where the source node needs to send the packet.

The source node then sends an AN message to its associated nodes to indicate that the source node is not available to receive a packet for a period indicated by the AN message (step 404). The source node switches to the channel on which the destination node camps, and sends a WDS packet to the destination node (steps 406, 408). Although the embodiment is described herein for an implementation that sends WDS traffic on a per-packet basis, (i.e. has to win access to the wireless medium every time the source node needs to send a packet), a series of packets may be sent sequentially once the source node gets access to the wireless medium.

The destination node may optionally send an ACK to the source node via the same channel on which the source node sent the WDS packet when the destination node successfully receives the WDS packet (step 410). The source node switches back to its own channel once the transmission of the WDS packet is completed, (or an ACK is received), or when the period announced through the AN message elapsed (step 412).

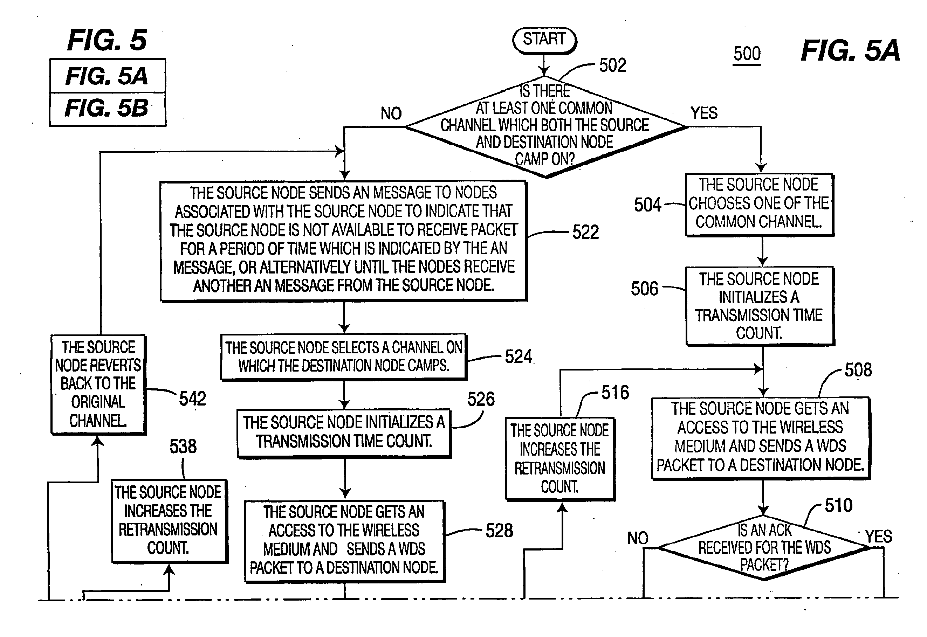

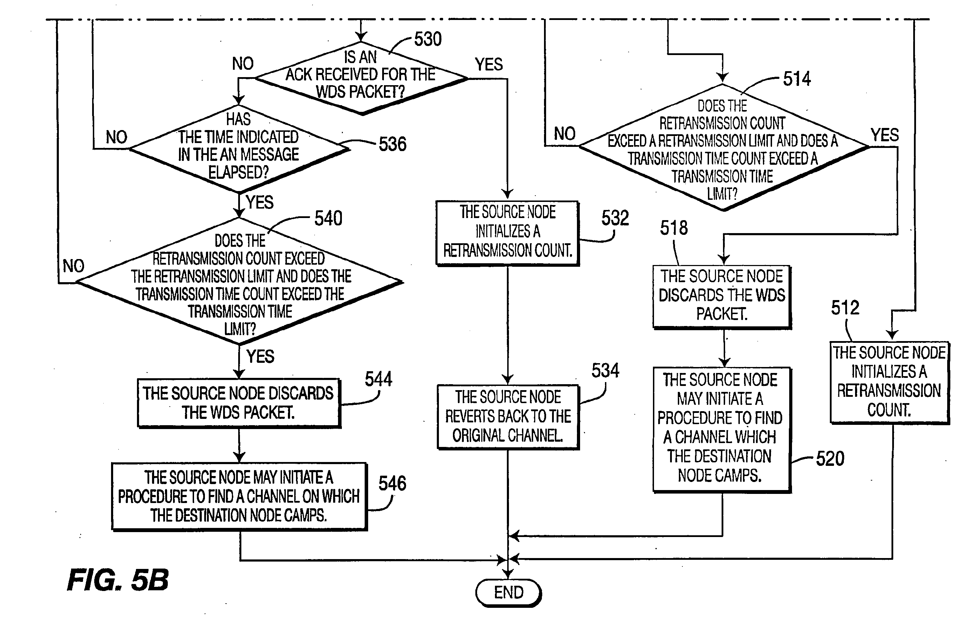

Figure 5 is a detailed flow diagram of a process 500 for exchanging a message between nodes in groups operating in different channels in accordance with the present invention. A source node determines whether there is at least one common channel which both the source node and a destination node camp on (step 502). It is assumed that the source node has an access to a list of neighboring nodes and a list of the channels on which these nodes camp on. If there is at least one common channel between the source node and the destination node, the source node chooses one of the common channels (step 504). The source node then initializes a transmission time count (step 506). The source node gets access to the wireless medium and sends a WDS packet to a destination node (step 508). The source node then determines whether an ACK is received for the WDS packet (step 510). If an ACK is received, the source node initializes a retransmission count to '0' (step 512) and the process 500 ends. If an ACK is not received, the source node determines whether a retransmission count exceeds a retransmission limit and a transmission time count exceeds a transmission time limit (step 514). If the retransmission count does not exceed the retransmission limit and the transmission time count does not exceed the transmission time limit, the source node increases the retransmission count by one (step 516) and the process 500 returns to step 508 to resend the WDS packet.

If either the retransmission count exceeds the retransmission limit or the transmission time count exceeds the transmission time limit, the source node discards the WDS packet (step 518). The source node may then initiate a procedure to find a channel on which the destination node camp (step 520). This is in case the transmission failure was due to the destination node having changed the channel onto which it camps without the source node knowing this.

If it is determined at step 502 that there is no common channel between the source node and the destination node, the source node sends an AN message to nodes associated with the source node to indicate that the source node is not available to receive a packet for a period of T which is indicated by the AN message, or alternatively until the nodes receive another AN message from the source node (step 522). The source node selects a channel on which the destination node camps (step 524). The source node initializes a transmission time count (step 526).

The source node gets an access to the wireless medium and sends a WDS packet to a destination node (step 528). The source node then determines whether an ACK is received for the WDS packet (step 530). If an ACK is received, the source node initializes a retransmission count to '0' (step 532). The source node then reverts back to the original channel (step 534) and the process 500 ends. If an ACK is not received, the source node determines whether the time indicated in the AN message has elapsed (step 536). If the time has not elapsed, the source node increases the retransmission count by one (step 538) and the process 500 returns to step 528 to resend the WDS packet.

If the time has elapsed, the source node determines whether the retransmission count exceeds the retransmission limit and the transmission time count exceeds the transmission time limit (step 540). If the retransmission count does not exceed the retransmission limit and the transmission time count does not exceed the transmission time limit, the source node reverts back to the original channel (step 542) and the process 500 returns to step 508 to resend the WDS packet.

If either the retransmission count exceeds the retransmission limit or the transmission time count exceeds the transmission time limit, the source node discards the WDS packet (step 544). The source node may initiate a procedure to find a channel on which the destination node camps (step 546).

The AN message may be sent either explicitly or implicitly. With an explicit signaling mechanism, the AN message may be sent through any information field or element, or through a signaling frame or procedure, which is currently existing or will be developed in the future. The AN message may be sent via an information field or information element which is attached to, or part of, either a new or a conventional L1 or L2 signaling frame. Alternatively, the AN message may be sent via a stand-alone L1 or L2 signaling frame. The frame may be a data frame, a control frame, an action frame, a management frame, or any other type of frame, and may be a unicast frame, a broadcast frame or a multicast frame.

The AN message may be sent via a special bit field carrying an assigned meaning in the context of the present invention. The special bit field may be a part of a preamble, a header or a data portion of the frame. Preferably, the special bit field is one of the currently reserved bit fields of the frame header.

The AN message may indicate either unavailability or availability. The AN message indicating unavailability indicates that the source node will not be able to receive a packet on the channel used within the group for a certain period of time indicated by the AN message or until another AN message indicating availability of the source node is sent. The AN message indicating availability indicates that the source node is now ready to receive a packet on the channel used within the group.

The AN message may further include at least one of the following type of information:
1) a schedule for which packets should or should not be sent to the source node sending the AN message, (i.e. a start time, end time, time intervals, periodicity, or a combination of these);
2) whether or not the destination nodes are asked to wait until they receive an AN message indicating availability, or whether or not the destination nodes must wait until the expiration of a time period indicated by the AN message; and
3) frequency information regarding the source node's planned activities during the off-channel period.

The AN message may be sent in an on-demand basis by the source node. The source node sends an AN message when the source node knows that there are packets to send to the destination node. Alternatively, the source node may announce a schedule of planned upcoming off-channel time periods. Instead of sending an AN message every time traffic to be transmitted to the destination node arrives, the source node pre-determines that some time periods in the future will be devoted (reserved) to transmitting packets to the destination node even if these packets are not available yet for transmission. The approach has an advantage of less signaling overhead.

The AN message may be sent implicitly. With an implicit signaling mechanism, the source node intending to go off-channel uses any conventional signaling frames or procedures to prevent other associated nodes in the BSS from sending a packet to the source node during the off-channel period. Examples of the implicit signaling mechanism include, but are not limited to, sending a clear-to-send (CTS) frame to self, (i.e., the source node), sending a contention free period (CFP) reservation frame not polling any STA and sending a hybrid coordination function (HCF) controlled channel access (HCCA) frame not polling any STA.

Figure 6 is a block diagram of a WTRU 600 configured in accordance with the present invention. The WTRU 600 includes a controller 602 and a transceiver 604. The transceiver 604 sends a packet via one of a plurality of channels. The controller 602 is configured to send an AN message to at least one associated WTRU via the channel used in the BSS of the WTRU and send a packet to a destination WTRU via a second channel on which the destination WTRU camps.

Embodiments.

1. A method of exchanging a message via a WDS between BSSs operating on different frequencies in a wireless communication system including a plurality of WTRUs and a plurality of BSSs wherein at least one WTRU belongs to each BSS.

2. The method of embodiment 1 comprising the step of a source WTRU sending an AN message to at least one WTRU which the source WTRU is associated with to indicate that the source WTRU will not be available to receive data via a first channel used by the source WTRU and a WTRU associated to the source WTRU.

3. The method as in any of the embodiments 1-2 comprising the step of the source WTRU accessing a second channel on which a destination WTRU camps.

4. The method of embodiment 3 comprising the step of the source WTRU sending a packet to the destination WTRU via the second channel.

5. The method of embodiment 4 comprising the step of the source WTRU reverting back to the first channel.

6. The method as in any of the embodiments 3-5 comprising the step of the source WTRU determining whether there is a common channel on which both the source WTRU and the destination WTRU camp, whereby the source WTRU sends the AN message only if there is no common channel.

7. The method as in any of the embodiments 3-5 comprising the step of if there is a common channel, the source WTRU accessing the common channel.

8. The method of embodiment 7 comprising the step of the source WTRU sending the packet to the destination WTRU via the common channel.

9. The method of embodiment 8 comprising the step of the source WTRU determining whether an ACK has been received for the packet.

10. The method of embodiment 9 comprising the step of if there is no ACK received, the source WTRU determining whether a retransmission count exceeds a retransmission limit and a transmission time count exceeds a transmission time limit.

11. The method of embodiment 10 comprising the step of if both the retransmission count exceeds the retransmission limit and the transmission time count exceeds the transmission time limit, the source WTRU discarding the packet.

12. The method as in any of the embodiments 10-11 comprising the step of if both the retransmission count does not exceed the retransmission limit and the transmission time count does not exceed the transmission time limit, the source WTRU resending the packet while increasing the retransmission count.

13. The method of embodiment 4 comprising the step of the source WTRU determining whether an ACK has been received for the packet.

14. The method of embodiment 13 comprising the step of if there is no ACK received, the source WTRU determining whether a retransmission count exceeds a retransmission limit and a transmission time count exceeds a transmission time limit.

15. The method of embodiment 14 comprising the step ofifboth the retransmission count exceeds the retransmission limit and the transmission time count exceeds the transmission time limit, the source WTRU discarding the packet.

16. The method of embodiment 15 comprising the step ofifboth the retransmission count does not exceed the retransmission limit and the transmission time count does not exceed the transmission time limit, the source WTRU resending the packet while increasing the retransmission count.

17. The method as in any of the embodiments 2-16, wherein the AN message is included in one of a control frame, an action frame, a management frame and a data frame.

18. The method as in any of the embodiments 2-17, wherein the AN message is included in one of a broadcast frame, multicast frame and a unicast frame.

19. The method as in any of the embodiments 2-18, wherein the AN message is included in one of a header, preamble and data portion of the frame.

20. The method as in any of the embodiments 2-19, wherein the AN message indicates a time period that the associated WTRU should not send data to the source WTRU.

21. The method as in any of the embodiments 2-20, wherein the AN message indicates that the associated WTRU should not send data until another AN message is sent to indicate that the source WTRU is available to receive data.

22. The method as in any of the embodiments 2-21, wherein the AN message includes information regarding the source WTRU's planned activities during the period that the source WTRU is not available to receive data.

23. The method as in any of the embodiments 2-22, wherein the AN message is sent implicitly to prevent the associated WTRU from sending a packet to the source WTRU.

24. The method of embodiment 23 wherein the source WTRU sends a CTS frame to the source WTRU.

25. The method of embodiment 23 wherein the source WTRU sends a CFP reservation frame which does not poll any WTRU.

26. The method of embodiment 23 wherein the source WTRU sends an HCCA frame which does not poll any WTRU.

27. The method as in any of the embodiments 2-26, wherein the source node sends the AN message as data to be transmitted to the destination node arrives.

28. The method as in any of the embodiments 2-27, wherein the source node announces a schedule for planned upcoming off-channel time periods, whereby the source node sends the AN message and accesses the second channel in accordance with the schedule.

29. A WTRU for exchanging a message via a WDS between BSSs operating on different frequencies in a wireless communication system including a plurality of WTRUs and a plurality of BSSs, wherein at least one WTRU belongs to each BSS.

30. The WTRU of embodiment 29 comprising a transceiver for sending a packet via one of a plurality of channels.

31. The WTRU as in any of the embodiments 29-30 comprising a controller configured to send an AN message to at least one associated WTRU via a first channel on which the associated WTRU camps to indicate that the WTRU will not be available to receive data, and send a packet to a destination WTRU via a second channel on which the destination WTRU camps.

32. The WTRU of embodiment 31 wherein the controller is configured to determine whether there is a common channel with the destination WTRU, whereby the controller sends the AN message only if there is no common channel.

33. The WTRU of embodiment 32 wherein the controller is configured to send the packet to the destination WTRU via the common channel if there is a common channel.

34. The WTRU as in any of the embodiments 31-33, wherein the controller is configured to determine whether an ACK has been received for the packet.

35. The WTRU of embodiment 34 wherein the controller is configured to, if there is no ACK received, determine whether a retry count exceeds a retry limit and a time count exceeds a time limit, and if both the retry count exceeds the retry limit and the time count exceeds the time limit, discard the packet.

36. The WTRU of embodiment 35 wherein the controller is configured to resend the packet while increasing the retry count if both the retry count does not exceed the retry limit and the time count does not exceed the time limit.

37. The WTRU as in any of the embodiments 31-36, wherein the AN message is included in one of a control frame, an action frame, a management frame and a data frame.

38. The WTRU as in any ofthe embodiments 31-37, wherein the AN message is included in one of a broadcast frame, multicast frame and a unicast frame.

39. The WTRU as in any of the embodiments 31-38, wherein the AN message is included in one of a header, preamble and data portion of the frame.

40. The WTRU as in any ofthe embodiments 31-39, wherein the AN message indicates a time period that the associated WTRU should not send data to the source WTRU.

41. The WTRU as in any of the embodiments 31-40, wherein the AN message indicates that the associated WTRU should not send data until another AN message is sent to indicate that the source WTRU is available to receive data.

42. The WTRU as in any of the embodiments 31-41, wherein the AN message includes information regarding the WTRU's planned activities during the period that the WTRU is not available to receive data.

43. The WTRU as in any ofthe embodiments 31-42, wherein the AN message is sent implicitly to prevent the associated WTRU from sending a packet to the WTRU.

44. The WTRU of embodiment 43 wherein the controller is configured to send a CTS frame to the WTRU.

45. The WTRU of embodiment 43 wherein the controller is configured to send a CFP reservation frame which does not poll any WTRU.

46. The WTRU of embodiment 43 wherein the controller is configured to send an HCCA frame which does not poll any WTRU.

47. The WTRU as in any of the embodiments 29-46, wherein the WTRU is an AP.

48. The WTRU as in any of the embodiments 29-46, wherein the WTRU is a STA.

49. The WTRU as in any of the embodiments 31-48, wherein the controller sends the AN message as data to be transmitted to the destination WTRU arrives.

50. The WTRU as in any of the embodiments 31-49, wherein the controller announces a schedule for planned upcoming off-channel time periods, whereby the controller sends the AN message and accesses the second channel in accordance with the schedule.

Although the features and elements of the present invention are described in the preferred embodiments in particular combinations, each feature or element can be used alone without the other features and elements of the preferred embodiments or in various combinations with or without other features and elements of the present invention.

## Claims

1. A method of exchanging a message via a wireless distribution system, WDS, supporting basic service sets, BSSs, operating on different frequencies, the method comprising:
a source wireless transmit/receive unit, WTRU (600), sending an availability notification, AN, message to at least one associated WTRU to indicate that the source WTRU will not be available to receive data via a first channel used by the source WTRU and the associated WTRU;
the source WTRU accessing a second channel on which a destination WTRU camps;
the source WTRU sending a packet to the destination WTRU via the second channel; and
the source WTRU reverting back to the first channel.

2. The method of claim 1 further comprising:
the source WTRU determining whether there is a common channel on which both the source WTRU and the destination WTRU camp, whereby the source WTRU sends the AN message only if there is no common channel.

3. The method of claim 1 wherein the AN message indicates a time period that the associated WTRU should not send data to the source WTRU.

4. The method of claim 1 wherein the AN message indicates that the associated WTRU should not send data until another AN message is sent to indicate that the source WTRU is available to receive data.

5. The method of claim 1 wherein the AN message is sent implicitly to prevent the associated WTRU from sending a packet to the source WTRU.

6. The method of claim 5 wherein the source WTRU sends a clear-to-send, CTS, frame to the source WTRU.

7. The method of claim 5 wherein the source WTRU sends a contention free period, CFP, reservation frame which does not poll any WTRU.

8. The method of claim 5 wherein the source WTRU sends a hybrid coordination function, HCF, controlled channel access, HCCA, frame which does not poll any WTRU.

9. A wireless transmit/receive unit, WTRU (600), for exchanging a message via a wireless distribution system between basic service sets, BSSs, operating on different frequencies, the WTRU comprising:
a transceiver (604) for sending a packet via one of a plurality of channels; and
a controller (602) configured to send an availability notification, AN, message to at least one associated WTRU via a first channel on which the associated WTRU camps to indicate that the WTRU will not be available to receive data, and send a packet to a destination WTRU via a second channel on which the destination WTRU camps.

10. The WTRU of claim 9 wherein the controller is configured to determine whether there is a common channel with the destination WTRU, whereby the controller sends the AN message only if there is no common channel.

11. The WTRU of claim 9 wherein the AN message indicates a time period that the associated WTRU should not send data to the WTRU.

12. The WTRU of claim 9 wherein the AN message indicates that the associated WTRU should not send data until another AN message is sent to indicate that the WTRU is available to receive data.

13. The WTRU of claim 9 wherein the AN message is sent implicitly to prevent the associated WTRU from sending a packet to the WTRU.

14. The WTRU of claim 13 wherein the controller is configured to send a clear-to-send, CTS, frame to the WTRU.

15. The WTRU of claim 13 wherein the controller is configured to send a contention free period, CFP, reservation frame which does not poll any WTRU.

16. The WTRU of claim 13 wherein the controller is configured to send a hybrid coordination function, HCF, controlled channel access, HCCA, frame which does not poll any WTRU.

## Patentansprüche

1. Verfahren zum Austausch einer Nachricht über ein drahtloses Verteilersystem WDS, das grundlegende Dienstsätze BSS unterstützt, die auf verschiedenen Frequenzen operieren, wobei das Verfahren aufweist:
eine drahtlose Quell-Sende/Empfangseinheit WTRU (600), die eine Verfügbarkeitsmitteilungs-, AN-, Nachricht an wenigstens eine verbundene WTRU sendet, um anzuzeigen, dass die Quell-WTRU nicht verfügbar sein wird, um Daten über einen ersten Kanal zu empfangen, der von der Quell-WTRU und der verbundenen WTRU verwendet wird;
Zugreifen der Quell-WTRU auf einen zweiten Kanal, auf dem eine Ziel-WTRU wartet;
Senden eines Pakets durch die Quell-WTRU an die Ziel-WTRU über den zweiten Kanal; und
Zurückleiten auf den ersten Kanal durch die Quell-WTRU.

2. Verfahren nach Anspruch 1, das ferner aufweist:
Bestimmen durch die Quell-WTRU, ob es einen gemeinsamen Kanal gibt, auf dem sowohl die Quell-WTRU als auch die Ziel-WTRU warten, wobei die Quell-WTRU nur dann eine AN-Nachricht sendet, wenn es keinen gemeinsamen Kanal gibt.

3. Verfahren nach Anspruch 1, wobei die AN-Nachricht eine Zeitspanne angibt, die die zugehörige WTRU keine Daten an die Quell-WTRU senden sollte.

4. Verfahren nach Anspruch 1, wobei die AN-Nachricht anzeigt, dass die verbundene WTRU keine Daten senden sollte, bis eine weitere AN-Nachricht gesendet wird, um anzuzeigen, dass die Quell-WTRU verfügbar ist, um Daten zu empfangen.

5. Verfahren nach Anspruch 1, wobei die AN-Nachricht unbedingt gesendet wird, um zu verhindern, dass die verbundene WTRU ein Paket an die Quell-WTRU sendet.

6. Verfahren nach Anspruch 5, wobei die Quell-WTRU einen Sendefreigabe-, CTS-, Rahmen an die Quell-WTRU sendet.

7. Verfahren nach Anspruch 5, wobei die Quell-WTRU einen Reservierungsrahmen für eine konkurrenzfreie Zeitspanne CFP sendet, der keine WTRU abfragt.

8. Verfahren nach Anspruch 5, wobei die Quell-WTRU einen Hybridkoordinationsfunktions-, HCF-, gesteuerten Kanalzugriffs-, HCCA-, Rahmen sendet, der keine WTRU abfragt.

9. Drahtlose Sende/Empfangseinheit WTRU (600) zum Austausch einer Nachricht über ein drahtloses Verteilersystem zwischen grundlegenden Dienstsätzen BSS, die auf verschiedenen Frequenzen operieren, wobei die WTRU aufweist:
einen Transceiver (604) zum Senden eines Pakets über einen von mehreren Kanälen; und
eine Steuerung (602), die konfiguriert ist, um eine Verfügbarkeitsmitteilungs-, AN-, Nachricht über einen ersten Kanal, auf dem die verbundene WTRU wartet, an wenigstens eine verbundene WTRU zu senden, um anzuzeigen, dass die WTRU nicht verfügbar sein wird, um Daten zu empfangen, und ein Paket über einen zweiten Kanal, auf dem die Ziel-WTRU wartet, an eine Ziel-WTRU zu senden.

10. WTRU nach Anspruch 9, wobei die Steuerung aufgebaut ist, um zu bestimmen, ob es einen gemeinsamen Kanal mit der Ziel-WTRU gibt, wobei die Steuerung die AN-Nachricht nur sendet, wenn es keinen gemeinsamen Kanal gibt.

11. WTRU nach Anspruch 9, wobei die AN-Nachricht eine Zeitspanne anzeigt, in der die verbundene WTRU keine Daten an die WTRU senden sollte.

12. WTRU nach Anspruch 9, wobei die AN-Nachricht anzeigt, dass die verbundene WTRU keine Daten senden sollte, bis eine weitere AN-Nachricht gesendet wird, um anzuzeigen, dass die WTRU verfügbar ist, um Daten zu empfangen.

13. WTRU nach Anspruch 9, wobei die AN-Nachricht unbedingt gesendet wird, um zu verhindern, dass die verbundene WTRU ein Paket an die WTRU sendet.

14. WTRU nach Anspruch 13, wobei die Steuerung konfiguriert ist, um einen Sendefreigabe-, CTS-, Rahmen an die WTRU zu senden.

15. WTRU nach Anspruch 13, wobei die Steuerung konfiguriert ist, um einen Reservierungsrahmen für eine konkurrenzfreie Zeitspanne CFP zu senden, der keine WTRU abfragt.

16. WTRU nach Anspruch 13, wobei die Steuerung konfiguriert ist, um einen Hybridkoordinationsfunktions-, HCF-, gesteuerten Kanalzugriffs-, HCCA-, Rahmen zu senden, der keine WTRU abfragt.

## Revendications

1. Procédé permettant d'échanger des messages via un système de distribution sans fil, WDS, supportant des ensembles de services de base, BSSs, fonctionnant sur des fréquences différentes, le procédé comprenant:
une unité de réception/transmission sans fil source, WTRU, (600) envoyant un message, AN, de notification de disponibilité, à au moins une WTRU associée pour indiquer que la WTRU source ne sera pas disponible pour recevoir des données via un premier canal utilisé par la WTRU source et la WTRU associée;
la WTRU source accédant à un deuxième canal sur lequel réside une WTRU cible ;
la WTRU source envoyant un paquet à la WTRU cible via le deuxième canal; et
la WTRU source revenant au premier canal.

2. Procédé de la revendication 1 comprenant en outre:
la WTRU source déterminant si un canal commun existe sur lequel résident la WTRU source et la WTRU cible, moyen par lequel la WTRU source envoie le message AN seulement si aucun chemin commun n'existe.

3. Procédé de la revendication 1, dans lequel le message AN indique une période de temps pendant laquelle la WTRU associée ne devrait pas envoyer des données à la WTRU source.

4. Procédé de la revendication 1 dans lequel le message AN indique que la WTRU associée ne devrait pas envoyer des données jusqu'à ce qu'un autre message AN soit envoyé pour indiquer que la WTRU source est disponible pour recevoir des données.

5. Procédé de la revendication 1, dans lequel le message AN est implicitement envoyé pour empêcher la WTRU associée d'envoyer un paquet à la WTRU source.

6. Procédé de la revendication 5, dans lequel la WTRU source envoie une trame, CTS, prête-à-émettre à la WTRU source.

7. Procédé de la revendication 5, dans lequel la WTRU source envoie une trame de réservation de période de temps sans contention, CFP, qui ne sollicite aucune WTRU.

8. Procédé de la revendication 5 dans lequel la WTRU source envoie une trame d'accès au canal commandé, HCCA, à fonction de coordination hybride, HCF, qui ne sollicite aucune WTRU.

9. Unité de réception/transmission sans fil, WTRU, (600) pour échanger des messages via un système de distribution sans fil entre des ensembles de services de base, BSSs, fonctionnant sur des fréquences différentes, la WTRU comprenant:
un émetteur-récepteur (604) pour envoyer un paquet via l'un d'une pluralité de canaux ; et
une unité de commande (604) configurée pour envoyer un message, AN, de notification de disponibilité à au moins une WTRU associée via un premier canal sur lequel réside la WTRU associée pour indiquer que la WTRU ne sera pas disponible pour recevoir des données, et pour envoyer un paquet à une WTRU cible via un deuxième canal sur lequel réside la WTRU cible.

10. WTRU de la revendication 9, dans laquelle l'unité de commande est configurée pour déterminer si un canal commun existe avec la WTRU cible, moyen par lequel l'unité de commande envoie le message An uniquement si aucun canal commun n'existe.

11. WTRU de la revendication 9, dans laquelle le message AN indique une période de temps pendant laquelle la WTRU associée ne devrait pas envoyer des données à la WTRU.

12. WTRU de la revendication 9, dans laquelle le message AN indique que la WTRU associée ne devrait pas envoyer des données jusqu'à ce qu'un autre message AN soit envoyé pour indiquer que la WTRU est disponible pour recevoir des données.

13. WTRU de la revendication 9, dans laquelle le message AN est implicitement envoyé pour empêcher la WTRU associée d'envoyer un paquet à la WTRU.

14. WTRU de la revendication 13, dans laquelle l'unité de commande est configurée pour envoyer une trame prête-à-émettre à la WTRU.

15. WTRU de la revendication 13, dans laquelle l'unité de commande est configurée pour envoyer une trame de réservation de période de temps sans contention, CFP, qui ne sollicite aucune WTRU.

16. WTRU de la revendication 13, dans laquelle l'unité de commande est configurée pour envoyer une trame d'accès au canal commandé, HCCA, à fonction de coordination hybride, HCF, qui ne sollicite aucune WTRU.
